# EUROPEAN PATENT SPECIFICATION

(11) **EP 0 473 595 B1**
(45) Date of publication and mention of the grant of the patent: **24.08.1994**
(21) Application number: 90904702.9
(22) Date of filing: 15.03.1990
(51) Int. Cl.: E04D 7/00

(54) **ELEMENT FOR TURFED ROOFS**
ELEMENT FÜR RASENGEDECKTE DÄCHER
ELEMENT POUR TOITS EN TOURBE

(30) Priority: 23.05.1989 NO 892067
(43) Date of publication of application: 11.03.1992
(73) Proprietor: NITTEDAL TORVINDUSTRI A/S, N-1482 Nittedal (NO)
(72) Inventor: ORDING, Alf, N-1482 Nittedal (NO)
(74) Representative: Grünecker, Kinkeldey, Stockmair & Schwanhäusser Anwaltssozietät
(86) International application number: NO9000052
(87) International publication number: WO9014476

(56) References cited:
- EP-A- 0 265 990
- DE-A- 2 750 697
- DE-A- 2 917 414
- DE-A- 3 530 124
- DE-C- 311 680
- DE-C- 3 301 954
- US-A- 4 486 121

## Description

The present invention concerns an element for making turfed roofs, covering inclined areas such as hills or mounds, outdoors, etc. and where the element in addition is suited as growth substrate which is not eroded from the roof or the surface on which it lays.

It is previously known to use peat or turf on roofs both for sound proofing and isolation. Thus, it is known from DE-A-35 10 318 to use turf mats containing glass wool for covering roofs with an inclination of more than 45°. However, it is not known from this publication to contain the turf mats in a surrounding sheath to contain the turf material more easily.

In DE-A-27 50 697, a stabilization element for the ground of slopes or dams, etc. is disclosed. The stabilization elements are casted blocks that are arranged in layers. The elements are placed at a distance from each other for filling therebetween with plant material, etc. The elements themselves are produced by a pressed mixture of plant material, seed material, earth, etc.

In DE-A-35 30 124, a method for producing special noise abatement walls is disclosed. The walls are built by tube-like sacks filled with granular or sandy material, whereby the material of the sacks should not decay. The sacks are used to reinforce the wall. Growth material of some kind may be filled between the sacks placed a distance apart from each other.

In contrast to the cited prior art, the problem which represents the basis of the present invention is that turfed roofs are often used on climatically exposed buildings such as mountain buildings. When laying such a turfed roof, it has been previously common practice to use a loose layer of turf, cut turf or peat mats which afterwards are sewn with grass and plant seeds and optionally covered with a netting to prevent wind or water scoring of the turf or peat material. However, in practice, this has not been sufficient since the turf has had a tendency to become eroded when laying, and in dry weather, large amounts of the turf has blown away before the grass or plants have rooted themselves sufficiently to secure the turf material.

Another problem in laying turfed roofs with such conventional turf mats has been that they have a tendency to disintergrate during handling so that the contruction worker remains standing with loose and unusable peat dust. This is especially true with turf mats.

In addition to these type of problems, turf material such as dry turf material oozes down or is possibly flushed away during rain storms.

The object of the present invention is thus to produce a turf/peat material which is suited for laying turfed roofs, especially in exposed places, which does not erode and which is especialy suited for laying roofs with an inclination of less than 45°. This purpose is achieved by including growth medium with a large water- and air capacity in a sheath which may secure the turf/peat material. Such a sheath may inter alia be a netting sack with a mesh opening of 1 mm² to 1 dm². The material of such a netting bag or sack may comprise plastic, sacking etc.

The laying of such a roof bay be done by, after having performed the necessary basic work on the roof by laying sufficiently waterproof and lasting base layers such as tarred board and/or plastic foundation plates etc. together with necessary edge boards, preferably in impregnated materials, laying the above described filled netting sacks closely together on the roof. Possible spaces between the sacks are filled by using the contents of some sacks as filling material or by using other suited material for such use. Thereafter the roof is sowed with suited seeds, inter alia grass seeds, and the seeds are covered with a thin layer of growth turf, growth earth, etc., and the material is then supplied with sufficient moisture through rain or watering. Alternately, the grass or plant seeds may be sowed directly on the netting or sacking material.

Enclosed are in addition figures showing examples of the construction and use of turf/peat covering sacks according to the invention, wherein:
Fig. 1 shows the construction of a turf/peat sack according to the invention,
Fig. 2 thows a cross section of the placement of turf/peat covering sacks according to the invention on a base treated roof,
Fig. 3 shows an overview of a partly covered turf roof with a covering material according to the present invention.

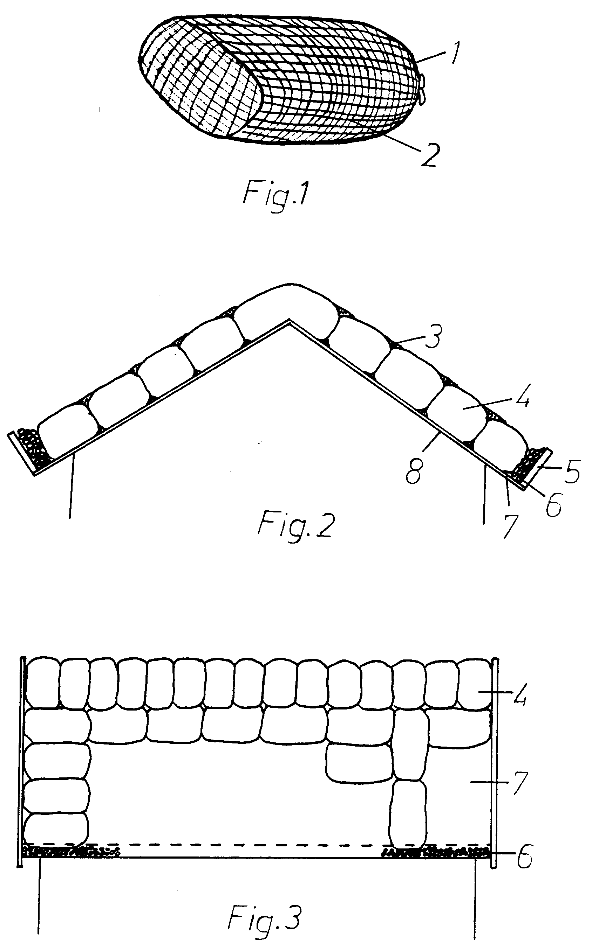

In fig. 1 the reference number 1 represents the surrounding material of netting or sacking, preferably with a light opening of between 1 mm² and 1 dm², around the medium 2, comprising inter alia growth turf/peat.

In fig. 2 the reference number 3 represents loose growth medium used for filling out the space between the turf/peat sacks according to the invention. The numbers 5, 6 and 7 represents edge boarding, drains and water-proof base of the roof 8, respectively.

In fig. 3 there have been used the same reference numbers as in fig. 2.

## Claims

1. Element for the laying of turfed rooves, **characterised in that** the element (1,2) comprises a netting (1) with a mesh size of 1 mm² to 1 dm² surrounding a turf/peat material (2) with large air and water capacity.

2. Element according to claim 1, **characterized in** that the netting comprises plastic or sacking material.

3. Use of elements according to claim 1 or 2 for laying roofs with an inclination of less than 45° where the elements are arranged side-by-side on the roof.

## Patentansprüche

1. Element zum Belegen von rasenbedeckten Dächern,
**dadurch gekennzeichnet,**
daß das Element (1, 2) ein Netzgewebe (1) mit einer Maschengröße von 1 mm² bis 1 dm² zur Umhüllung eines aus trockenem Gras/trockenem Moos gebildeten Torfmaterials (2) mit einer großen Luft- und Wasseraufnahmekapazität aufweist.

2. Element nach Anspruch 1,
**dadurch gekennzeichnet,**
daß das Netzgewebe aus Plastik oder Sackleinen ist.

3. Verwendung von Elementen nach den Ansprüchen 1 oder 2 zum Belegen von Dächern mit einer Neigung von weniger als 45°^{,} wobei die Elemente Seite an Seite auf dem Dach angeordnet sind.

## Revendications

1. Élément servant au revêtement de toits en tourbe, caractérisé en ce que l'élément (1, 2) comprend un treillis (1) d'une taille de maille allant de 1 mm² à dm², entourant un matériau à base de tourbe/masse tourbeuse (2) possédant un grand volume d'air et d'eau.

2. Élément selon la revendication 1, caractérisé en ce que le treillis est réalisé en une matière plastique ou un matériau d'emballage.

3. Utilisation d'éléments selon la revendication 1 ou 2, afin de recouvrir des toits d'une inclinaison inférieure à 45°, dans laquelle les éléments sont disposés côte-à-côte sur le toit.
